# EUROPEAN PATENT APPLICATION

(11) **EP 2 634 473 A1**
(43) Date of publication of application: **04.09.2013**
(21) Application number: 11835601.3
(22) Date of filing: 18.10.2011
(51) Int. Cl.: F21S 2/00, F21V 23/04, F21V 17/00, F21V 19/00, F21V 29/00, F21V 3/02, F21Y 101/02

(54) **A MICROWAVE INDUCTION LED BULB**

(30) Priority: 29.10.2010 CN 201020585262 U
(71) Applicant: Chen, Ming Yun, Guangdong 523000 (CN)
(72) Inventor: Chen, Ming Yun, Guangdong 523000 (CN)
(74) Representative: Rees, Simon John Lewis
(86) International application number: PCT/CN2011/080898
(87) International publication number: WO 2012/055328

(57) **Abstract**

The invention relates to bulb technical field, and more particularly relates to microwave sensor LED bulb. A LED bulb includes a male plug, a housing, a LED light and a light cover. The male plug is disposed at top side of the housing while the LED light and the light cover are disposed at bottom side of the housing. The light cover covers the LED light. The LED bulb also includes a microwave sensor and the light cover covers the microwave sensor. The invention is not only convenient for use and also suitable for environment that needs automatic control.

## Description

### CROSS REFERENCE TO RELATED APPLICATIONS

This present application claims the benefit of PCT application No. PCT/CN2011/080898 filed October 18, 2011 which claims the priority of China application No. 201020585262.6 filed October 29, 2010, the entire disclosures of which are hereby incorporate by reference in their entireties.

### FIELD

The present invention relates to bulb technology and more particularly relates to a microwave sensor light emitting diode (LED) bulb.

### BACKGROUND

Lights are widely used for illumination in city roads, sidewalk, garages, offices, public place and bring people convenient life. Common illumination equipment includes tungsten filament bulb, fluorescent lamp, LED lamps, etc. LED lamps have advantages of high efficiency, safety, energy conservation, environment protection, long lifetime, fast response and become mostly widely used illumination lamp.

LED light tubes are a common LED lamp. Usually, a switch is used for controlling on and off of a LED bulb. It is not convenient enough and not suitable for environment that needs automatic control.

### SUMMARY OF THE INVENTION

One of objectives of the present invention is to cure the deficiency of conventional art by providing a microwave sensor LED bulb, which is convenient to be used and suitable for environment that needs automatic control.

To achieve the aforementioned objectives, an embodiment according to the present invention is explained as follows. A microwave sensor LED bulb includes a male plug, a housing, a LED light and a light cover. The male plug is disposed at top side of the housing. The LED light and the light cover are disposed at bottom side of the housing. The light cover covers the LED light. The microwave sensor LED bulb also includes a microwave sensor and the light cover covers the microwave sensor.

The housing may be an aluminum-alloy heat dissipation body. The aluminum-alloy heat dissipation body includes hollow installtion part inside to through the top side and the bottom side. An exterior sidewall of the aluminum-alloy heat dissipation body is disposed with cooling fins. The male plug is disposed at top side of the aluminum-alloy heat dissipation body and the LED light and the light cover are disposes at bottom side of the aluminum-alloy heat dissipation body.

The exterior side of the cooling fins has a curve shape.

The exterior side of the cooling fins has a arc shape.

The top side of the aluminum-alloy heat dissipation body may have the top side of larger area than the bottom side of the aluminum-alloy heat dissipation body.

The light cover may be a cubical.

The light cover may be a cylinder cove body.

The light cover may be a shere cover body.

Technical effect of the present invention are explained as follows. The microwave sensor LED bulb includes a light cover, a housing, a LED light and a cover. The male plug is disposed at top side of the housing and the LED light and the light cover are disposed at bottom side of the housing. The light cover covers the LED light. The microwave sensor LED bulb also includes a microwave sensor. The light cover covers the microwave sensor. When the microwave sensor LED bulb is used, the microwave sensor senses human movement. Once human movement is detected, the LED light is turned on. Otherwise, when human movement is not detected, the LED light is controlled to turn off for achieving the objective of automatic control. This is convenient and also suitable for environment that needs automatic control.

### BRIEF DESCRIPTION OF DRAWINGS

FIG. 1 illustrates a structural diagram of a first embodiment according to the present invention;
FIG. 2 illustrates a structural diagram of a housing of the first embodiment according to the present invention;
FIG. 3 illustrates a structural diagram of the housing of the first embodiment to the present invention in another view angle; and
FIG. 4 illustrates a structural diagram of a second embodiment according to the present invention.

### DETAILED DESCRIPTION OF THE EMBODIMENTS

The present invention is explained in more details with accompanied drawings.

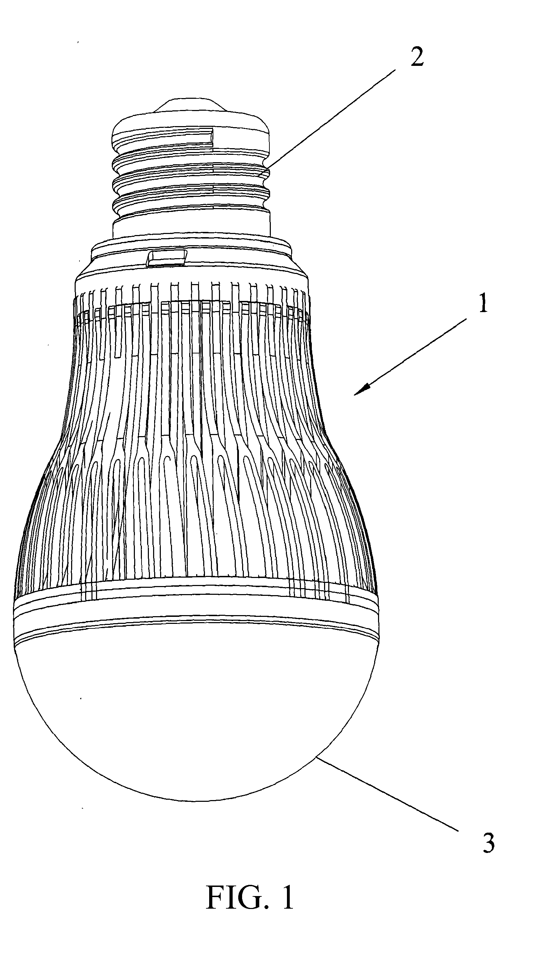

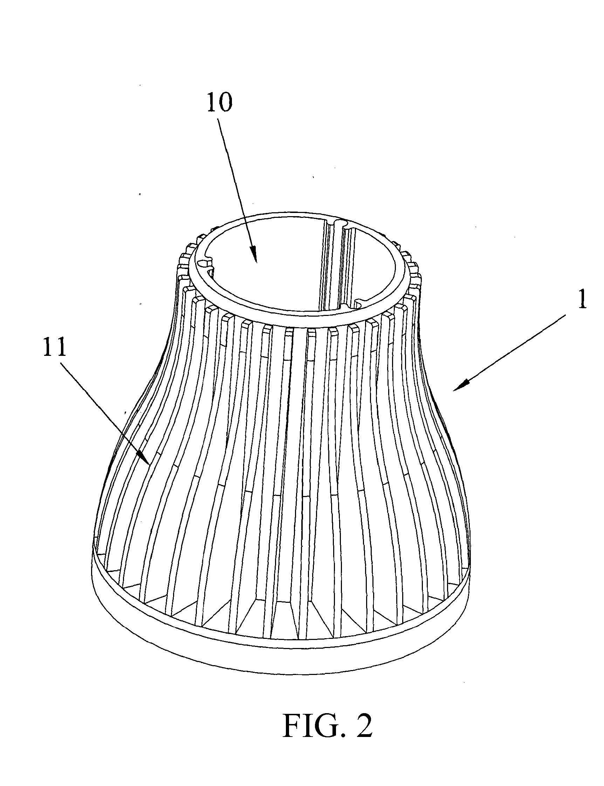

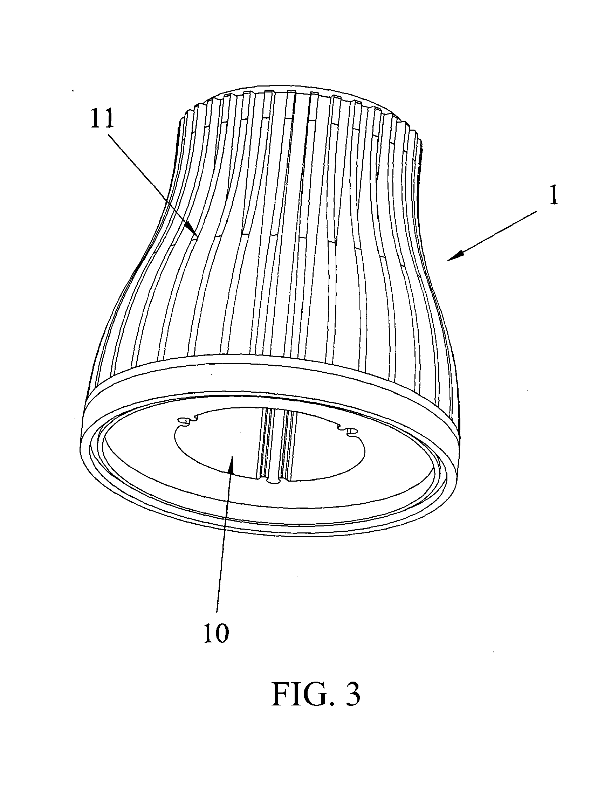

In a first embodiment, as shown in FIG. 1 to FIG. 3, a microwave sensor LED bulb includes a male plug 2, a housing 1, a LED light and a light cover 3. The male plug 2 is disposed at top side of the housing 1. The LED light and the light cover 3 are disposed at bottom side of the housing 1. The light cover 3 covers the LED light. The microwave sensor LED bulb also includes a microwave sensor. The light cover 3 covers the microwave sensor. In the first embodiment, the light cover 3 is a sphere cover body. The light cover 3, however, may be other shapes, like cubical cover body, cylinder cover body or any other kind of cover body.

In a preferred embodiment, the housing 1 is an aluminum-alloy heat dissipation body. The aluminum-alloy heat dissipation body has a hollow installation part inside to through the top side and the bottom. The aluminum-alloy heat dissipation body has cooling fins 11 at its exterior sidewall. The exterior side of the cooling fins 11 has a curve shape. The top side of the aluminum-alloy heat dissipation body has larger area than the bottom side of the aluminum-alloy heat dissipation body. The overall shape matches the exterior shape of the LED bulb. When in use, mass heat produced by the LED bulb is dissipated to outside via the aluminum-alloy heat dissipation body. The hollow installation part 10 and the cooling fins 11 help increase heat dissipation effect a lot for increasing life time of the LED bulb.

The operation of the aforementioned microwave sensor LED bulb utilizes the advantages of microwave sensor that has fast response and high sensibility. When the microwave sensor LED light is used, the microwave sensor light senses human movement. When human movement is detected, the LED light is turned on. When no human movement is detected, the LED light is turned off. With such design, automatic control is achieved. If additional switch is used, there is more flexibility. Such design is not only convenient for use and also suitable for environment that needs automatic control.

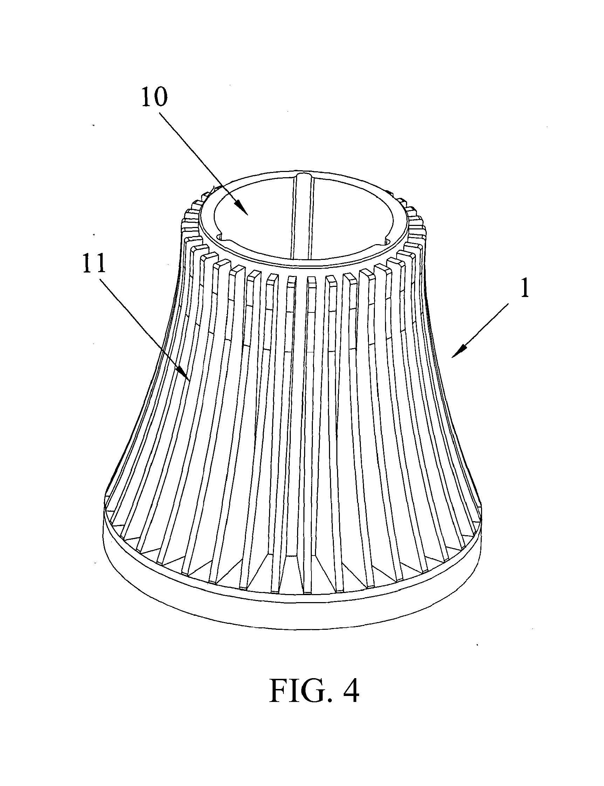

In a second embodiment, as shown in FIG. 4, the difference from the first embodiment is that the microwave sensor LED bulb of the second embodiment has cooling fins with arc shape, which also ensures the overall shaping of the housing 1 matching the LED bulb.

While the present invention has been related in terms of the foregoing embodiments, those skilled in the art will recognize that the invention is not limited to the embodiments described. The present invention can be practiced with modification and alteration within the spirit and scope of the appended claims. Thus, the description is to be regarded as illustrative instead of restrictive on the present invention.

## Claims

1. A microwave sensor light emitting diode (LED) bulb, comprising:
a male plug;
a housing;
a light emitting diode (LED) light;
a light cover, wherein the male plug is disposed at top side of the housing, the LED light and the light cover are disposed at bottom side of the housing, and the light cover covers the LED light; and
a microwave sensor, the light cover covering the microwave sensor.

2. The microwave sensor LED bulb, wherein the housing is an aluminum- alloy heat dissipation body having an hollow installation part inside to through the top side and the bottom side, cooling fins disposed at an exterior sidewall of the aluminum-alloy dissipation body, the male plug being disposed at top side of the aluminum-alloy heat dissipation body, and the LED light and the light cover are disposed at bottom side of the aluminum-alloy heat dissipation body.

3. The microwave sensor LED blub of claim 2, wherein the exterior side of the cooling fins has a curve shape.

4. The microwave sensor LED bulb of claim 3, wherein the exterior side of the cooling fins has an arc shape.

5. The microwave sensor LED bulb of claim 4, wherein the top side of the aluminum-alloy heat dissipation body has larger area than the bottom side of the aluminum-alloy heat dissipation body.

6. The microwave sensor LED bulb of claim 1, wherein the light cover is a cubical cover body.

7. The microwave sensor LED bulb of claim 1, wherein the light cover is a cylinder cover body.

8. The microwave sensor LED bulb of claim 1, wherein the light cover is a sphere cover body.
